# EUROPÄISCHE PATENTSCHRIFT

(11) **EP 2 921 089 B1**
(45) Veröffentlichungstag und Bekanntmachung des Hinweises auf die Patenterteilung: **01.03.2017**
(21) Anmeldenummer: 15159923.0
(22) Anmeldetag: 19.03.2015
(51) Int. Cl.: A47J 31/46, F16K 11/072

(54) **KERAMIKVENTIL MIT FEDERLAGERUNG**
CERAMIC VALVE WITH SPRING STORAGE
SOUPAPE EN CÉRAMIQUE DOTÉE DE PALIER ÉLASTIQUE

(30) Priorität: 20.03.2014 DE 102014205269
(43) Veröffentlichungstag der Anmeldung: 23.09.2015
(73) Patentinhaber: BSH Hausgeräte GmbH, 81739 München (DE)
(72) Erfinder: Wrehde, Stefan, 83365 Nußdorf (DE); Eder, Florian, 83132 Pittenhart (DE); Einsiedler, Thomas, 83278 Traunstein (DE)

(56) Entgegenhaltungen:
- EP-A1- 0 307 497
- EP-A1- 0 483 700
- EP-A1- 1 300 105
- EP-A1- 2 151 613
- WO-A1-2014/072379

## Beschreibung

Die Erfindung betrifft ein keramisches Scheibenventil für Heißgetränkezubereitungseinrichtungen für Haushaltszwecke insbesondere für Kaffeevollautomaten, mit zumindest einer Druckleitung für Heißwasser oder Dampf, mit wenigstens einer Druckableitung zum Beispiel in eine Brüheinrichtung und mit einem Gehäuse als Haltevorrichtung für darin angeordnete, dicht aneinander anliegende und gegeneinander verstellbare keramische Ventilscheiben, nämlich wenigstens eine feststehende Verteilerscheibe und wenigstens eine verstellbare Steuerscheibe, und mit jeweils einer Dichtung zur Abdichtung der Ventilscheiben gegenüber dem Gehäuse.

Ein keramisches Scheibenventil dieser Art zeigen beispielsweise die EP 2 151 613 A1 und die EP 307 497 A1. Es wird in der Regel in Espressomaschinen oder Kaffeevollautomaten als Mehrwegeventil eingesetzt, um in einer ersten Schaltstellung erhitztes Wasser in eine Brüheinheit zur Zubereitung von kaffeebasierten Heißgetränken oder um Dampf in einer zweiten Schaltstellung einer Aufschäumdüse zum Erhitzen und Aufschäumen von Milch beispielsweise für die Zubereitung von Cappuccino oder um Dampf oder Wasser in einer weiteren Schaltstellung in eine Restwasserschale zu leiten.

Die EP 1 300 105 A1 zeigt dazu ein keramische Scheibenventil, bei dem die Genauigkeit der Drehwinkeleinstellung durch ein Maltesergetriebe verbessert wird.

Da die Scheibenventile mit kochendem Wasser oder Dampf beaufschlagt werden, was gegebenenfalls zu Kalkablagerungen führen kann, sind sie einem hohen Verschleiß unterworfen.

Aufgabe der Erfindung ist es daher, ein keramisches Scheibenventil dahingehend zu verbessern, dass es eine höhere Lebensdauer bei weitgehend gleich bleibenden Eigenschaften erhält.

Diese Aufgabe wird bei dem eingangs genannten keramischen Scheibenventil erfindungsgemäß durch Federelemente zum Aufbringen eines definierten Anpressdrucks zwischen dem Gehäuse und den Ventilscheiben gelöst. Die Federelemente haben allein die Aufgabe, für einen definierten Anpressdruck zwischen den Ventilscheiben zu sorgen und sind konstruktiv ausschließlich auf diese Aufgabe hin ausgelegt. Die Dichtungen werden damit von dieser Aufgabe entlastet und können folglich hinsichtlich Material und Konstruktion allein auf ihren Dichtungszweck hin bemessen und ausgelegt werden. Die Erfindung wendet sich also davon ab, den Dichtungen eine Doppelfunktion zu verleihen, nämlich diejenige des Abdichtens einerseits und diejenige des Aufbringens eines Anpressdrucks andererseits. Sie verfolgt vielmehr das Prinzip einer Aufgabentrennung, wonach die zusätzlichen Federelemente ausschließlich für einen genau definierten Anpressdruck ausgelegt sind, wohingegen die Dichtungen ausschließlich der Abdichtung der Ventilscheiben gegenüber dem Gehäuse dienen. Damit lassen sich vor allem über die Lebensdauer des keramischen Scheibenventils betrachtet eine zuverlässigere Abdichtung einerseits und ein weitgehend konstanter Anpressdruck andererseits erreichen. Insbesondere alterungsbedingte plastische Verformungen von Gummidichtungen können durch die Federelemente ausgeglichen werden, sodass die Anpresskraft zwischen den Ventilscheiben nahezu konstant bleibt. Denn die Federelemente können hinsichtlich Material und Dimensionierung so ausgewählt werden, dass sie eine möglichst flache Federkennlinie aufweisen, jedenfalls eine flachere als diejenige von Gummi. Damit stellen sie auch bei einem alterungsbedingten Nachlassen der Dichtungen einen weitgehend konstanten Anpressdruck zur Verfügung. Damit kann das Keramikscheibenventil eine quasi konstante Druckfestigkeit während seiner gesamten Lebensdauer erreichen. Umgekehrt braucht der Anpressdruck zwischen den Ventilscheiben im neuen Zustand des Scheibenventils nicht vorsorglich höher eingestellt zu werden. Damit kann vermieden werden, dass Schmiermittel zwischen den Ventilscheiben ausgepresst wird, das später fehlt und die Ventilscheiben schwergängig werden lässt.

Um ihre Aufgabe möglichst dauerhaft erfüllen zu können, sollte sich die Funktion der Federelemente durch Heißwasser und Heißdampf möglichst nicht beeinträchtigen lassen. Nach einer vorteilhaften Ausgestaltung der Erfindung kann das keramische Scheibenventil daher Federelemente aus Metall, insbesondere aus Stahl, umfassen, beispielsweise Blatt-, Teller- oder Spiralfedern. Auch wenn sie kochend heißem Wasser oder Dampf unmittelbar ausgesetzt sind, ist die Funktion der Federelemente nicht beeinträchtigt. Sie sind widerstandsfähig gegenüber Temperatureinflüssen und damit keiner Alterungsproblematik unterworfen. Damit können sie aufgrund ihrer flachen Federkennlinie während ihrer gesamten Lebensdauer einen nahezu konstanten Anpressdruck zwischen den Ventilscheiben erzeugen, sodass das Scheibenventil insgesamt eine höhere Lebensdauer erhält. Elastomere dagegen verformen sich unter konstanter Belastung plastisch, sie weisen also einen Druckverformungsrest auf, der über die Lebensdauer des Ventils betrachtet die Vorspannung elastomerer Federelemente reduziert.

Erfingdungsgemäß verfügt das keramische Scheibenventil über einen Dichtungsträger, der die Dichtungen der Ventilscheiben trägt und mit den Federelementen gegenüber dem Gehäuse verlagerbar abgestützt ist. Der Dichtungsträger liegt folglich zwischen den Dichtungen einerseits und den Federelementen andererseits, sodass sich die Dichtungen nicht unmittelbar an dem Gehäuse oder den Federelementen abstützen, sondern auf dem Dichtungsträger. Die Dichtungen liegen im Übrigen weiter bestimmungsgemäß an den Ventilscheiben an, die Federelemente stützen sich zwischen dem Dichtungsträger und dem Gehäuse ab. Sie sind damit mit den Dichtungen weiterhin "in Reihe geschaltet", allerdings unter Zwischenschaltung des Dichtungsträgers. Er bietet eine definierte Abstützung zwischen den Dichtungen einerseits und den Federelementen andererseits. Zusätzlich müssen die Federelemente nicht zwingend koaxial mit den Dichtungen angebracht werden, sondern können räumlich entfernt angeordnet sein. Damit können sie außerhalb des Einwirkungsbereichs der Druckzuleitung liegen, womit sie geschützt von thermischen Einwirkungen angeordnet sein können, nicht auf sie abgestimmt sein müssen und damit kostengünstiger ausgebildet sein können. Auch wenn mehrere Dichtungen für die Ventilscheiben erforderlich sind, genügt in der Regel ein einziger Dichtungsträger für eine der Dichtungen und eine Anzahl von Federelementen zur Abstützung des Dichtungsträgers gegenüber dem Gehäuse. Er ist vorzugsweise auf der Druckseite des Scheibenventils und damit im Bereich der regelmäßig einzigen Druckzuleitung angeordnet, weil der Dichtungsträger dann nur für eine einzige Leitung durchbrochen zu sein braucht, was seine Herstellung vereinfacht.

Der Dichtungsträger kann nach einer weiteren vorteilhaften Ausführungsform der Erfindung innerhalb des Gehäuses des Scheibenventils lotrecht zur Erstreckungsebene der Ventilscheiben geführt sein und/oder gleichmäßig, beispielsweise symmetrisch, durch die Federelemente im Gehäuse abgestützt sein. Dazu kann er Führungseinrichtungen wie Schienen oder Führungsflächen aufweisen, die mit Führungseinrichtungen im Gehäuse korrespondieren. Dadurch liegt er jederzeit zuverlässig parallel zu den Ventilscheiben und unterwirft die dazwischenliegende Dichtung keiner ungleichmäßigen Verteilung des Anpressdrucks. Auch die gleichmäßige Belastung der Dichtungen trägt zu einer langen bzw. hohen Lebensdauer des Scheibenventils bei.

Die Federelemente haben erfindungsgemäß die Aufgabe, einen weitgehend konstanten Anpressdruck der Ventilscheiben untereinander auch über die Lebensdauer des Scheibenventils aufrecht zu erhalten. Abgestimmt auf die jeweils verwendeten Dichtungen und abhängig von der vorhandenen Dichtfläche können sie für einen minimalen Anpressdruck von etwa 0,5 N/mm², vorzugsweise von 0,25 N/mm², und besonders bevorzugt von 0,1 N/mm² sorgen. Bei einem Prototyp des erfindungsgemäßen Scheibenventils ergab eine Anpresskraft von 100 N bei einer Dichtfläche von etwa 240 mm² einen Anpressdruck von etwa 0,42 N/mm².

Vorteilhafterweise können die Federelemente auch auf einen maximalen Anpressdruck hin ausgelegt sein, um keinen zu hohen Anpressdruck zwischen den Ventilscheiben zu erzeugen. Dadurch könnte unerwünschter Maßen insbesondere bei neuwertigen Scheibenventilen Schmiermittel zwischen den Ventilscheiben ausgepresst werden. Bei einem zu hohen Anpressdruck altern darüber hinaus die Dichtungen schneller. Der maximale Anpressdruck der Federelemente wird erfindungsgemäß darüber hinaus zur Ausbildung eines Überdruckventils genutzt: Nach einer weiteren vorteilhaften Ausgestaltung der Erfindung kann das Scheibenventil nämlich über Mittel zum Öffnen einer Passage zum Druckabbau zwischen den Ventilscheiben und dem Gehäuse bei einem definierten Öffnungsdruck bieten. Der definierte Öffnungsdruck fällt dabei mit dem maximalen Anpressdruck zusammen. Damit kann das Scheibenventil zusätzlich die Funktion eines Überdruckventils übernehmen, sodass dessen separate Anordnung entfallen kann. Bei Überschreiten des maximalen Anpressdrucks bzw. beim Erreichen des definierten Öffnungsdruck öffnet sich die Passage und ermöglicht einen Überdruckabbau bzw. eine Entspannung. Die Passage kann entweder zwischen den Ventilscheiben selbst, zwischen einer Ventilscheibe und der ihr zugeordneten Dichtung und/oder zwischen einer Dichtung und dem Gehäuse bzw. dem Dichtungsträger entstehen. Sie kann sich in einen Innenraum des Gehäuses des Scheibenventils öffnen und von dort in eine Restwasserschale entwässern. Alternativ kann eine Ablaufrinne vorgesehen sein, die nach Aktivierung der Überdruckfunktion des Scheibenventils Heißwasser oder Kondenswasser aus einer Dampfentspannung gezielt abführt.

Nach einer weiteren vorteilhaften Ausgestaltung der Erfindung können die Federelemente zum Aufbringen eines definierten Anpressdrucks von maximal 0,95 N/mm², vorzugsweise von maximal 1,25 N/mm² und besonders bevorzugt von maximal 1,5 N/mm² zwischen dem Gehäuse und den Ventilscheiben ausgelegt sein. Mit der Definition eines maximalen Anpressdrucks ist gleichzeitig ein Öffnungsdruck definiert, bei dessen Erreichen bzw. Überschreiten die Federelemente nachgeben. Sie führen damit zu einem Verschieben des Dichtungsträgers und damit zum Öffnen einer Passage zum Abbau von Überdruck. Damit erhalten die Federelemente eine Doppelfunktion, nämlich einerseits die des Erzeugens eines minimalen Anpressdrucks, um für eine dichte Anlage für die Ventilscheiben untereinander zu sorgen, und andererseits diejenige der Definition eines maximalen Anpressdrucks, bei dessen Erreichen oder Überschreiten das Scheibenventil als Überdruckventil wirkt.

Nach einer weiteren vorteilhaften Ausführungsform der Erfindung kann der Dichtungsträger als Mittel zum Abschirmen der Federelemente zumindest vor unmittelbaren Wasser- bzw. Dampfeinwirkungen ausgebildet sein. Insbesondere im Fall einer Überdruckentlastung bzw. Entspannung kann der Dichtungsträger die Federelemente gegenüber unmittelbaren thermischen Einwirkungen abschirmen. Damit können als Federelemente auch solche zum Einsatz kommen, die eine unmittelbare Einwirkung von Heißwasser bzw. Heißdampf auf Dauer nicht ohne Folgen verkraften können, wie insbesondere Federelemente aus bestimmten Kunststoffarten. Die Abschirmung der Federelemente gegenüber der unmittelbaren Beaufschlagung durch Heißwasser bzw. Heißdampf trägt zu einer zuverlässigen Funktion des Scheibenventils als Überdruckventil und zu einer langen bzw. hohen Lebensdauer des Scheibenventils bei.

Nach einer weiteren vorteilhaften Ausgestaltung der Erfindung kann das Scheibenventil über eine becherförmige Aufnahme der Dichtung im Bereich der Druckzuleitung verfügen. Die becherförmige Aufnahme kann außerdem zur seitlichen Führung der Dichtung bei ihrer Einfederung dienen und Kontaktflächen bieten, von denen sich die Dichtung abhebt, wenn eine Passage aus Folge des Überdrucks geöffnet wird. Sie kann mit einer Ableitung für Wasser oder Dampf in eine Restwasserschale, zum Beispiel in der Form eines Schlauchs oder einer Rinne kombiniert sein.

Nach einer weiteren vorteilhaften Ausgestaltung der Erfindung kann das Scheibenventil im Gehäuse und/oder im Dichtungsträger über Köcher als Halterung der Federelemente verfügen. Sie können eine Positionier- und Montagehilfe für die Federelemente selbst darstellen, aber auch im Betrieb des Scheibenventils für eine definierte Lage der Federelemente sogen. Sie ermöglichen damit eine verhältnismäßig einfache Montage der Federelemente, weil sie eine befestigungsfreie Halterung für die Federelemente darstellen.

Für die Funktionsweise des erfindungsgemäßen keramischen Scheibenventils ist es an sich belanglos, ob die verlagerbare Steuerscheibe verschoben oder verdreht wird, um unterschiedliche Schaltzustände des Scheibenventils zu erreichen. Das Scheibenventil kann über eine drehbare Steuerscheibe verfügen und eine punktsymmetrische Lagerung des Dichtungsträgers gegenüber dem Gehäuse mit dem Drehpunkt der Steuerscheibe als Symmetriezentrum aufweisen. Der weitgehend scheibenförmige Dichtungsträger ist innerhalb des Scheibenventils quasi beidseitig elastisch gelagert, nämlich einerseits durch die Federelemente gegenüber dem Gehäuse und andererseits durch die Dichtung gegenüber den Ventilscheiben. Mit einer symmetrischen Ausgestaltung seiner Lagerung wirken nachvollziehbare Lagerkräfte auf ihn ein, die seine Konstruktion und Dimensionierung vereinfachen.

Ohne die Funktion als Überdruckventil soll das Scheibenventil möglichst dauerhaft dicht bleiben. Um ein wasserdurchströmendes Scheibenventil über dessen Gesamtlebensdauer in sich dicht zu halten, reicht die Federvorspannung z. B. einer Spiralfeder nur bis zu einem bestimmten Wasserdruck aus. Die Dichtheit des Scheibenventils soll allerdings auch bei z. B. in Fehlerfällen auftretenden erhöhten Druck erhalten bleiben. Nach einer weiteren vorteilhaften Ausgestaltung der Erfindung kann das Scheibenventil daher eine Verrastungseinrichtung zwischen dem Dichtungsträger und dem Gehäuse aufweisen, die eine Bewegung des Dichtungsträgers entgegen der Richtung des Anpressdrucks der Federelemente bzw. in deren Expansionsrichtung blockiert. Erfindungsgemäß weist also das Scheibenventil zusätzlich zu den Federelementen eine Art mechanische Arretierung des verschiebbaren Dichtungsträgers auf. Die Arretierung bzw. Verrastungseinrichtung lässt eine Bewegung des Dichtungsträgers in Richtung der Federelemente zu, eine Bewegung in der Gegenrichtung aber unterbindet sie. Die Verrastungseinrichtung bewirkt also, dass der Dichtungsträger bei erhöhtem Wasserdruck im Scheibenventil keine allzu große druckentlastende Ausweichbewegung durchführen kann und somit die zur Abdichtung erforderliche erhöhte Vorspannung der Dichtungen der Ventilscheiben aufrechterhalten bleibt. Sollten sich die Dichtungen während ihrer Lebensdauer plastisch verformen, verschieben die Federelemente den Dichtungsträger sukzessive in Richtung ihrer Federkraft. Die Verrastungseinrichtung lässt diese Bewegung zwar zu, indem der Dichtungsträger während der Alterung der Dichtungen in aufeinanderfolgenden Rastpositionen der Verrastungseinrichtung nach und nach eingreift. An einer Bewegung in eine entgegengesetzte Richtung aber ist der Dichtungsträger nach Einrasten in eine Rastposition gehindert.

Die Federvorspannung der Federelemente reicht nur bis zu einem bestimmten Druck zur Abdichtung des Scheibenventils aus, weil beim Druckaufbau im Scheibenventil das lokale Kräftegleichgewicht verändert wird. Die durch den Wasserdruck ausgebübte Öffnungskraft wirkt am stärksten zwischen dem Dichtungsträger und der darauf liegenden Dichtung. Da sich hier bauartbedingt die mit Abstand größte Angriffsfläche befindet, wird der Dichtungsträger von der Dichtung weg und stärker gegen die Federelemente gedrückt. Dies bedeutet zum einen zwar einen Anstieg der von den Federelementen ausgebübten Federkraft, zum anderen geht aber dabei auch die Vorspannung der Dichtung zum Dichtungsträger verloren. Der negative Effekt des Verlustes an Vorspannung ist auf Grund der in der Regel steileren Federkennlinie der Dichtung deutlich höher als der ihm entgegenwirkende der Effekt der erhöhten Federspannung der Federelemente. Wenn der Wasserdruck den Dichtungsträger zu weit in die Federelemente drückt und damit die Vorspannung der Dichtung zu gering wird, lässt deren Dichtwirkung stark nach bzw. geht verloren. Der im Ventil herrschende Wasserdruck kann über entstehende Spalten zwischen der Dichtung und dem Gehäuse teilweise abgebaut werden, was bei einer unbeabsichtigten Funktion des Scheibenventils als Überdruckventil unerwünscht ist. Das Scheibenventil ist damit solange undicht, bis das Kräftegleichgewicht zwischen dem Wasserdruck, dem Dichtungsdruck und der Vorspannung der Federelemente derart wieder hergestellt ist, dass die Dichtwirkung wieder einsetzt. Erfindungsgemäß kann der Dichtungsträger bei erhöhtem Wasserdruck im Scheibenventil nur eine sehr geringe druckentlastende Ausgleichsbewegung entgegengesetzt der Federkraftwirkung durchführen, bis sie durch die Verrastungseinrichtung gestoppt wird. Somit lässt sich der Grenzwasserdruck, ab dem die Dichtheit des Ventils nachlässt bzw. nicht mehr gegeben ist, zu deutlich höheren Werten verschieben. Denn der vom Wasserdruck erzeugten Öffnungskraft wirkt nun die sehr steile Federkennlinie der Dichtungen bzw. die relativ hohe Vorspannung der Dichtung auf dem Dichtwulst entgegen.

Die erfindungsgemäße Verrastungseinrichtung hat zudem den Vorteil, dass die Vorspannung durch die Federelemente reduziert werden kann, wodurch eine geringere Qualität der Keramikscheiben gewählt oder sogar auf deren Fetten verzichtet werden kann. Beides bietet einen Konstruktions- und Kostenvorteil. Die Gefahr, dass die Keramikscheiben durch Reibung einander blockieren, wird durch eine geringere Vorspannung der Federelemente reduziert. Sie müssen nur noch daraufhin ausgelegt werden, dass sie bei einer plastischen Verformung der Dichtungen den dadurch verloren gegangen Weg ausgleichen können, um somit den Dichtungsträger in die nächste Rastposition drücken zu können. Auch eine geringere Vorspannkraft ermöglicht weniger bzw. kostengünstigere Federelemente, wodurch die Erfindung wiederrum einen Kostenvorteil bietet.

Nach einer weiteren vorteilhaften Ausgestaltung der Erfindung kann die Verrastungseinrichtung eine Vielzahl an Raststufen aufweisen. Je mehr Raststufen die Verrastungsvorrichtung aufweist, in umso kürzeren Intervallen können sie angebracht sein. Je kürzer ihr Abstand ist, in umso kürzeren Schritten können die alterungsbedingt nachlassenden Dichtungen entlastet werden. Damit hält das Scheibenventil während seiner Lebensdauer zuverlässig dicht.

Nach einer weiteren vorteilhaften Ausgestaltung der Erfindung kann die Verrastungseinrichtung Rastvorsprünge am Dichtungsträger und mit ihnen zusammenwirkende Rastnasen am Gehäuse oder umgekehrt aufweisen. Sie können in Bewegungsrichtung des Dichtungsträgers einander zugewandte und geneigt verlaufenden Anlaufflächen und jeweils orthogonal zur Bewegungsrichtung des Dichtungsträgers verlaufenden Blockadeflächen umfassen. Die Vorsprünge und/oder die Rastnasen können über elastisch federnde Arme als Träger am Dichtungsträger und/oder am Gehäuse gehalten sein.

Nach einer weiteren vorteilhaften Ausgestaltung der Erfindung kann die Verrastungsvorrichtung einstückig mit dem Dichtungsträger bzw. mit dem Gehäuse ausgebildet sein. Damit lässt sich die Verrastungseinrichtung kostengünstig zusammen mit dem übrigen Scheibenventil herstellen, was dessen Montage erleichtert.

Erfindungsgemäß kann also das Scheibenventil eine Art mechanische Arretierung des verschiebbaren Dichtungsträgers aufweisen, die parallel zu den Federelementen wirkt bzw. einseitig begrenzend auf diejenige Bewegung einwirkt, die die Federelemente ermöglichen. Nach einer zu der Arretierung alternativen Ausführungsform der Erfindung kann sich deren Wirkung auch durch einen Gewinde- oder Spindeltrieb zwischen dem Gehäuse und dem Dichtungsträger erzielen lassen. Der Dichtungsträger ist dann also nicht mehr verschiebbar innerhalb des Gehäuses gelagert, sondern durch ein Gewinde mit einer geeignet flachen Gewindesteigung drehbar. Er bleibt damit grundsätzlich in axialer Richtung bzw. orthogonal zur Erstreckungsebene der Ventilscheiben verlagerbar, jedoch nur unter gleichzeitiger Drehung. Dem Fachmann ist es möglich, eine geeignete Gewindeneigung in Abhängigkeit u.a. von den auftretenden Drehmomenten, den Reibparametern der beiden Gewindepartner usw. zu ermitteln. Mit einer geeignet gewählten Gewindesteigung bewirkt der Trieb eine Hemmung der Relativbewegung des Dichtungsträgers vom Gehäuse weg bzw. aus ihm heraus. Eine Bewegung des Dichtungsträgers in der Gegenrichtung dagegen können die Federelemente unterstützen. Diese können nach einer weiteren vorteilhaften Ausgestaltung der Erfindung statt einer achsparallelen Neigung derart gegenüber der Achsrichtung bzw. zur Lotrichtung auf die Erstreckungsebene der Ventilscheiben geneigt sein, dass sie ein Drehmoment auf den Dichtungsträger ausüben, so dass jener auf das Gehäuse hin bzw. in das Gehäuse hinein bewegt wird. Damit können schwächere oder weniger Federelemente und ggf. eine flachere Gewindeneigung gewählt werden, die eine Kostenreduktion und geringere Bauteilabmessungen des Keramikscheibenventils ermöglichen. Damit kann auf die Ausbildung einer Arretierung bzw. Verrastungsvorrichtung verzichtet werden.

Das Prinzip der Erfindung wird im Folgenden anhand einer Zeichnung beispielshalber noch näher erläutert. In der Zeichnung zeigen:
- Figur 1:: einen Schnitt durch ein erstes erfindungsgemäßes Keramikventil,
- Figur 2:: einen Ausschnitt aus Figur 1 zur Darstellung einer weiteren Ausführungsform.

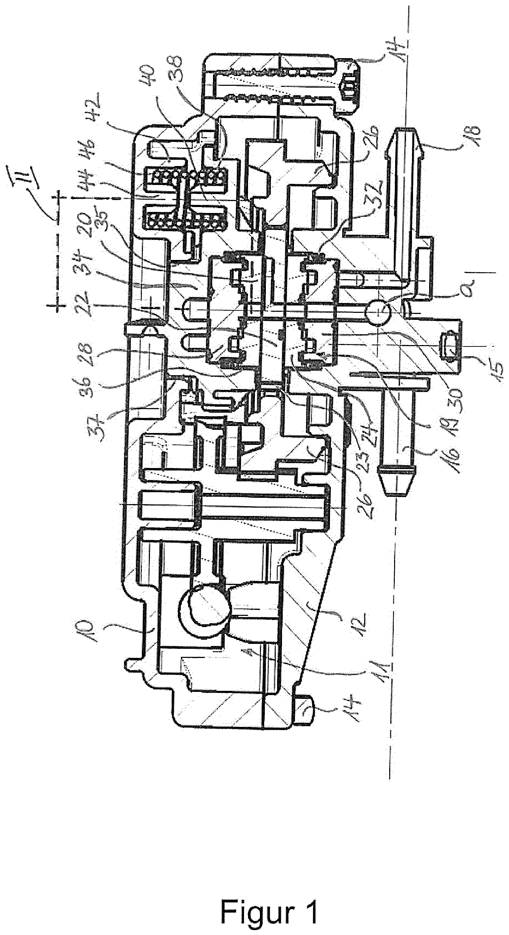

Das erfindungsgemäße Keramikventil gemäß Figur 1 besitzt ein Gehäuseoberteil 10 und ein Gehäuseunterteil 12, die schalenartig aufeinander liegen und einen Innenraum 11 einschließen. Sie werden durch Schrauben 14 aufeinander gehalten. Am Gehäuseunterteil 12 ist ein Anschluss 15 für die Ableitung von Heißwasser in Richtung einer nicht dargestellten Brüheinheit angebracht, ein Anschluss 16 für einen Luft- oder Dampfstoß und ein Anschluss 18 für die Ableitung von Heißdampf zu einer nicht dargestellten Dampfdüse.

Zwischen dem Gehäuseoberteil 10 und dem Gehäuseunterteil 12 ist im Innenraum 11 ein Paket 19 aus keramischen Ventilscheiben 20, 22, 24, beispielsweise aus Aluminiumoxid oder Siliciumcarbid, gehalten. Das Paket 19 besteht aus einer oberen Verteilerscheibe 20, die im Bereich einer Druckzuleitung angeordnet ist, einer dazwischen angeordneten Steuerscheibe 22 und einer darunter angebrachten unteren Verteilerscheibe 24. Die Verteilerscheiben 20, 24 und die Steuerscheibe 22 sind koaxial zueinander bezüglich einer Drehachse a der Steuerscheibe 22 angeordnet und werden von Bohrungen für Heißwasser, Luft und Heißdampf durchsetzt. Die Verteilerscheiben 20, 24 sind drehfest über dem Gehäuseoberteil 10 bzw. im Gehäuseunterteil 12 gehalten. Die dazwischen angeordnete Steuerscheibe 22 weist an ihrem Umfang radiale Vertiefungen 23 auf, in die ein ihr gegenüber konzentrisch angeordnetes Antriebsrad 26 eingreift. Das Antriebsrad 26 verdreht bei Bedarf die Steuerscheibe 22 gegenüber den Verteilerscheiben 20, 24. Dazu lässt es sich über ein Ritzel 27 antreiben.

Auf ihrer der Steuerscheibe 22 abgewandten Seite schließen sich an die obere Verteilerscheibe 20 eine obere Dichtung 28 und an die untere Verteilerscheibe 24 eine untere Dichtung 30 an. Sie sind aus EPDM ausgebildet und jeweils mit der Verteilerscheibe 20, 24 verpresst, so dass sie neben einer zuverlässigen Abdichtung untereinander auch zum Aufbringen eines gewissen geringen Anpressdrucks der Verteilerscheiben 20, 24 gegenüber der Steuerscheibe 22 beitragen. Die untere Dichtung 30 stützt die untere Verteilerscheibe 24 gegenüber dem Gehäuseunterteil 12 ab. Beide ruhen in einem Becher 32, der im Gehäuseunterteil 12 und als dessen Bestandteil ausgebildet ist.

Die obere Dichtung 28 dagegen stützt die obere Verteilerscheibe 20 gegenüber einem prinzipiell scheibenförmigen Dichtungsträger 34 ab, der als separates Bauteil zwischen dem Gehäuseoberteil 10 und dem Gehäuseunterteil 12 angeordnet ist. Er ist vertikal, also in Richtung der Drehachse a der Steuerscheibe 22, in geringem Maße verschiebbar im Gehäuseoberteil 10 gelagert. Vertikal verlaufende Flanken 35 am Dichtungsträger 34 führen ihn dabei an Anlageflächen 37 am Gehäuse 10. Auch der Dichtungsträger 34 umfasst eine becherförmige Aufnahme 36, die die obere Verteilerscheibe 20 und deren obere Dichtung 28 aufnimmt und mit seiner Öffnungsseite auf die Öffnungsseite des Bechers 32 hin ausgerichtet.

Koaxial dazu, aber mit entgegengesetzten Öffnungsrichtungen, trägt der Dichtungsträger 34 drei becherartige Köcher 38 mit einem zentralen stiftförmigen Führungsdorn 40, von dem nur einer in der Figur 1 zu erkennen ist. Die Köcher 38 korrespondieren mit durchmessergleichen, aber entgegengesetzt gerichteten Köchern 42 mit ebenfalls jeweils einem zentralen stiftförmigen Führungsdorn 44, die im Gehäuseoberteil 10 angeordnet und als deren Bestandteil ausgebildet sind. Jedes der drei Köcherpaare aus einem Köcher 38 und einem Köcher 42 nimmt jeweils eine von drei stählernen Spiralfedern 46 auf (nur eine in Figur 1 erkennbar), in die die Führungsdorne 40, 44 axial eingreifen und die Spiralfedern 46 zentrieren.

Die Spiralfedern 46 bringen eine Vorspannung auf die Ventilscheiben 20, 22, 24 auf, die im Stand der Technik ausschließlich von Dichtungen des Ventilpakets aufgebracht werden musste. Da die Federkennlinien der Spiralfedern 46 deutlich flacher verlaufen und sie mit den Dichtungen 28, 30 hintereinander bzw. in Reihe geschaltet sind, können sie plastische Verformungen der Dichtungen 28, 30 in Folge von Alterung ausgleichen. Dadurch kann die Anpresskraft zwischen den Ventilscheiben 20, 22, 24 nahezu konstant gehalten werden. Die Druckfestigkeit des erfindungsgemäßen Scheibenventils kann also auch während seiner Lebensdauer weitgehend aufrechterhalten werden.

Der Dichtungsträger 34 verfügt über ein gewisses vertikales Spiel innerhalb des Gehäuseoberteils 10 und des Gehäuseunterteils 12. Erfindungsgemäß sind die Spiralfedern 46 daher zusätzlich auf einen vorab definierten Öffnungsdruck hin ausgelegt, bei dem sie ein Ausweichen des Dichtungsträgers 34 in vertikaler Richtung auf das Gehäuseoberteil 10 hin und vom Gehäuseunterteil 12 weg gezielt zulassen. Dadurch öffnet sich eine Durchgangspassage für Heißwasser und/oder Heißdampf zwischen den Ventilscheiben 20, 22, 24 oder zwischen den Dichtungen 28, 30 gegenüber dem Gehäuseunterteil 12 oder dem Dichtungsträger 34. Mit dem Öffnen der Durchgangspassage kann ein Überdruck jenseits des definierten Öffnungsdrucks abgebaut werden. Damit bildet der Dichtungsträger 34 zugleich eine Art Überdruckventil, das bei Auftreten eines Ducks jenseits des Öffnungsdrucks einen gezielten Druckabbau zulässt. Ein separates Überdruckventil kann dadurch entfallen. Dadurch lassen sich sowohl der Bauraum als auch Herstellungskosten des Kaffeevollautomaten mit dem erfindungsgemäßen Keramikventil einsparen.

Der Dichtungsträger ist weitgehend teller- oder scheibenförmig ausgebildet. Seine Erstreckungsebene verläuft im Wesentlichen parallel zur Erstreckungsebene der Ventilscheiben 20, 22, 24. Ihr gegenüber befinden sich Ventilscheiben 20, 22, 24 auf der den Spiralfedern 46 gegenüberliegenden Seite. Die Spiralfedern 46 stecken außerdem in den Köchern 38. Damit sind sie bei einem Ansprechen des Scheibenventils auf einen Überdruck gegenüber einem Austreten von Heißwasser oder Dampf im Bereich der Ventilscheiben 20, 22, 24 weitgehend abgeschirmt.

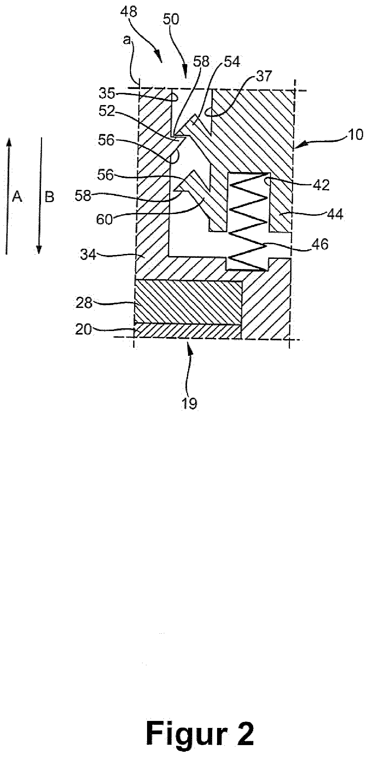

Figur 2 stellt grundsätzlich einen Ausschnitt der Schnittansicht gemäß Figur 1 dar, um ein Detail einer weiteren Ausführungsform des erfindungsgemäßen Keramikventils zu verdeutlichen. Figur 2 zeigt in einer stark schematisierten Darstellung einen Abschnitt des Pakets aus den Ventilscheiben 19, einen Abschnitt des Dichtungsträgers 34 und den Köcher 42 als Bestandteil des feststehenden Gehäuseoberteils 10, in dem eine der Spiralfedern 46 gehalten ist. Die Spiralfeder 46 stützt den an sich beweglichen Dichtungsträger 34 im Köcher 42 und damit gegen das feststehende Gehäuseoberteil 10 ab. Soweit die Übereinstimmungen mit dem Gegenstand der Figur 1.

Anstelle der vertikal verlaufenden Flanke 35 am Dichtungsträger 34 und der Anlagefläche 37 am Gehäuseoberteil 10, die durch unmittelbare Anlage aneinander eine Führung gemäß Figur 1 bewerkstelligen, befindet sich beim Keramikventil gemäß Figur 2 ein Spalt 48, in dem eine Verrastungseinrichtung 50 angeordnet ist. Sie setzt sich aus einem Rastvorsprungen 52 , der von der Flanke 35 am Dichtungsträger 34 in Richtung der gegenüberliegenden Anlagefläche 37 am Gehäuseoberteil 10 absteht, und aus Rastnasen 54 zusammen, die an der Anlagefläche 37 angebracht sind und in den Spalt 48 hineinragen. Hat die Dichtung 28 beispielsweise eine Dicke von 5 mm, dann haben die Rastnasen 54 einen Abstand von 1 mm. Sowohl der Rastvorsprung 52 als auch die Rastnasen 54 haben einen im Schnitt betrachtet dreieckigen Querschnitt, wobei eine Dreiecksseite der Befestigung des Rastvorsprungs 52 bzw. der Rastnasen 54 am Dichtungsträger 34 bzw. am Gehäuseoberteil 10 dient. Eine weitere Dreiecksseite verläuft in Achsrichtung a bzw. in der Bewegungsrichtung des Dichtungsträgers 34 jeweils geneigt und nahezu parallel zueinander. Die letzte Dreiecksseite stellt jeweils eine orthogonal zur Achse a verlaufende Blockadefläche 58 dar. Während der Rastvorsprung 52 unmittelbar an der Flanke 35 angebracht ist, stehen die Rastnasen 54 von der Anlagefläche 37 ab, indem sie über einen elastisch federnden Arm 60 an ihr befestigt sind.

Wie zu Figur 1 beschrieben drückt die Spiralfeder 46 den Dichtungsträger 34 vom feststehenden Gehäuseteil 10 weg in Richtung B. Dieser Federkraft wirkt also im Betrieb insbesondere ein Wasserdruck entgegen, der in Richtung des Pfeils A auf den Dichtungsträger 34 einwirkt. Dessen Bewegung in Richtung A, die der Druckbelastung ausweichen und sie entlasten könnte, begrenzt nun die Verrastungsvorrichtung 50, indem die Blockadeflächen 58 des Rastvorsprungs 52 und der Rastnasen 54 aneinander zur Anlage kommen. Die Verrastungsvorrichtung 50 sorgt folglich für eine Mindestvorspannung der Dichtung 28 im Keramikventil. Einem weiter steigenden Wasserdruck brauchen also nicht mehr die Federn 46 entgegenzuwirken, sondern er wird in der Verrastungsvorrichtung 50 aufgenommen.

Kommt es nun zu einer alterungsbedingten plastischen Verformung der Dichtung 28, so bewegt sich der Dichtungsträger 34 im unbelasteten Zustand und auf Druck der Federn 46 in Richtung B. Dadurch kann sich die Vorspannung der Dichtung 28 sukzessive verringern. Außerdem vergrößert sich der potentielle Ausweichweg des Dichtungsträgers 34 in der Richtung A im Falle einer Belastung.

Mit steigendem Lebensalter der Dichtungen 28 kann es also zu einem Verschieben des Dichtungsträgers 34 in Richtung des Pfeils B kommen. Unterstützt durch die Federkraft der Federn 46 kommen nach und nach die Anlaufflächen 56 der Verrastungseinrichtung 50 zur Anlage aneinander. Bei einem weiteren Nachlassen der Vorspannung der Dichtung 28 gleiten die Anlaufflächen 56 aneinander entlang, wodurch die Rastnasen 54 vom Dichtungsträger 34 elastisch weggedrückt werden und in Richtung der Anlageflächen 37 auf ihren elastischen Armen 60 ausweichen. Anschließend verrastet eine der beiden Rastnasen 54 in der Bewegungsrichtung B hinter dem Rastvorsprung 52, sodass die Blockadeflächen 58 aneinander anliegen. Damit ist eine druckentlastende Ausgleichsbewegung des Dichtungsträgers 34 in Richtung des Pfeils A auf einem neuen Niveau beschränkt, sodass der Grenzwasserdruck, ab dem die Dichtigkeit des Keramikventils nachlässt, wieder auf sein ursprüngliches Wertniveau gebracht ist. Dadurch lässt sich auch bei Alterung der Dichtung 28 der Grenzwasserdruck für eine Undichtigkeit des Scheibenventils anpassen bzw. auf einem bestimmten Niveau halten, womit insgesamt die Lebensdauer des Scheibenventils steigt.

Da es sich bei dem vorhergehenden, detailliert beschriebenen keramischen Scheibenventil um ein Ausführungsbeispiel handelt, kann es in üblicher Weise vom Fachmann in einem weiten Umfang modifiziert werden, ohne den Bereich der Erfindung zu verlassen. Insbesondere kann auch die konkrete Ausgestaltung des weitgehend scheibenförmigen Dichtungsträgers beispielsweise mit Aufkantungen, mehreren Scheibenebenen oder in anderer Form als in der hier beschriebenen folgen. Ebenso kann die Anordnung der Federelemente in einer anderen Form ausgestaltet werden, wenn dies aus Platzgründen bzw. designerischen Gründen notwendig ist. Weiter schließt die Verwendung der unbestimmten Artikel "ein" bzw. "eine" nicht aus, dass die betreffenden Merkmale auch mehrmals bzw. mehrfach vorhanden sein können.

### Bezugszeichenliste

- 10: Gehäuseoberteil
- 11: Innenraum
- 12: Gehäuseunterteil
- 14: Schrauben
- 15, 16, 18: Anschluss
- 19: Paket aus Ventilscheiben
- 20: obere Verteilerscheibe
- 22: Steuerscheibe
- 23: Vertiefungen
- 24: untere Verteilerscheibe
- 26: Antriebsrad
- 28: obere Dichtung
- 30: untere Dichtung
- 32: Becher
- 34: Dichtungsträger
- 35: Flanken
- 36: becherförmige Aufnahme
- 37: Anlageflächen
- 38: Köcher
- 40: Führungsdorn
- 42: Köcher
- 44: Führungsdorn
- 46: Spiralfeder
- 48: Spalt
- 50: Verrastungsvorrichtung
- 52: Rastvorsprung
- 54: Rastnase
- 56: Anlauffläche
- 58: Blockadefläche
- 60: elastischer Arm

- a: Drehachse
- A: Bewegungsrichtung
- B: Bewegungsrichtung

## Patentansprüche

1. Keramisches Scheibenventil für Heißgetränkezubereitungseinrichtungen für Haushaltszwecke, insbesondere für Kaffeevollautomaten, mit einer Druckzuleitung, mit wenigstens einer Druckableitung (16; 18) und mit einem Gehäuse (10, 12) als Haltevorrichtung für darin angeordnete, dicht aneinander anliegende und gegeneinander verstellbare keramische Ventilscheiben (20; 22; 24), nämlich wenigstens eine feststehende Verteilerscheibe (20; 24) und wenigstens eine verstellbare Steuerscheibe (22), und mit jeweils einer Dichtung (28; 30) zur Abdichtung der Ventilscheiben (20; 22; 24) gegenüber dem Gehäuse (10, 12),
**gekennzeichnet durch**
Federelemente (46) zum Aufbringen eines Anpressdrucks zwischen dem Gehäuse (10, 12) und den Ventilscheiben (20; 22; 24)
**und durch**
einen Dichtungsträger (34), der eine Dichtung (28) einer Ventilscheibe (20) trägt und mit den Federelementen (46) gegenüber dem Gehäuse (10) verlagerbar abgestützt ist.

2. Scheibenventil nach Anspruch 1, **gekennzeichnet durch** Federelemente (46) aus Metall.

3. Scheibenventil nach Anspruch 2, **gekennzeichnet durch** Führungseinrichtungen (35; 37) zur lotrecht zur Erstreckungsebene der Ventilscheiben (20; 22; 24) gerichteten Führung des Dichtungsträgers (34) im Gehäuse (10, 12).

4. Scheibenventil nach Anspruch 1 bis 3, **gekennzeichnet durch** Mittel zum Öffnen einer Passage zwischen den Ventilscheiben (20; 22; 24) und dem Gehäuse (10, 12) bei einem definierten Öffnungsdruck.

5. Scheibenventil nach dem obigen Anspruch, **gekennzeichnet durch** Spiralfedern (46) als Federelemente zum Aufbringen eines Anpressdrucks zwischen dem Gehäuse (10, 12) und den Ventilscheiben (20; 22; 24).

6. Scheibenventil nach einem der Ansprüche 4 oder 5, **dadurch gekennzeichnet, dass** der Dichtungsträger (34) als Mittel zum Abschirmen der Federelemente (46) zumindest vor unmittelbaren Wasser- bzw. Dampfeinwirkungen ausgebildet ist.

7. Scheibenventil nach einem der Ansprüche 1 bis 6, **gekennzeichnet durch** eine becherförmige Aufnahme am Dichtungsträger (34) zur Aufnahme der Dichtung im Bereich der Druckzuleitung.

8. Scheibenventil nach dem obigen Anspruch, **gekennzeichnet durch** Köcher (38; 42) im Gehäuse (10) und/oder im Dichtungsträger (23) als Halterung der Federelemente (46).

9. Scheibenventil nach einem der Ansprüche 1 bis 8, **gekennzeichnet durch** eine Verrastungseinrichtung (50) zwischen dem Dichtungsträger (34) und dem Gehäuse (10), die eine Bewegung des Dichtungsträgers (34) entgegen der Richtung des Anpressdrucks der Federelemente (46) blockiert.

10. Scheibenventil nach dem obigen Anspruch, **gekennzeichnet durch** eine Vielzahl an Raststufen der Verrastungseinrichtung (50).

11. Scheibenventil nach einem der Ansprüche 9 oder 10, **gekennzeichnet durch** Rastvorsprünge (52) am Dichtungsträger (34) und **durch** mit ihnen zusammenwirkende Rastnasen (54) am Gehäuse (10) oder umgekehrt mit jeweils in Bewegungsrichtung des Dichtungsträgers (34) geneigt verlaufenden Anlaufflächen (56) und mit jeweils orthogonal zur Bewegungsrichtung des Dichtungsträgers (34) verlaufenden Blockadeflächen (58).

12. Scheibenventil nach einem der Ansprüche 9 bis 11, **dadurch gekennzeichnet, dass** die Verrastungsvorrichtung (50) einstückig mit dem Dichtungsträger (34) bzw. mit dem Gehäuse (10) ausgebildet ist.

13. Scheibenventil nach einem der Ansprüche 1 bis 8, **gekennzeichnet durch** einen Gewinde- oder Spindeltrieb zwischen dem Dichtungsträger und dem Gehäuse.

## Claims

1. Ceramic butterfly valve for hot beverage preparation facilities for domestic use, in particular for fully automatic coffee machines, with a pressure supply line, with at least one pressure discharge line (16; 18) and with a housing (10, 12) as a retaining apparatus for ceramic valve discs (20; 22; 24) which are arranged therein, lie close together and can be adjusted with respect to one another, namely at least one fixed distributor disc (20; 24) and at least one adjustable control disc (22), and with a seal (28; 30) in each case for sealing the valve discs (20; 22; 24) with respect to the housing (10, 12),
**characterised by**
spring elements (46) for applying a contact pressure between the housing (10, 12) and the valve discs (20; 22; 24)
**and by**
a seal carrier (34), which carries a seal (28) of a valve disc (20) and is supported by the spring elements (46) so that it can be moved with respect to the housing (10).

2. Butterfly valve according to claim 1, **characterised by** spring elements (46) made of metal.

3. Butterfly valve according to claim 2, **characterised by** guide facilities (35; 37) for guiding the seal carrier (34) in the housing (10, 12) in a direction perpendicular to the extension plane of the valve discs (20; 22; 24).

4. Butterfly valve according to claim 1 to 3, **characterised by** means for opening a passage between the valve discs (20; 22; 24) and the housing (10, 12) at a defined opening pressure.

5. Butterfly valve according to the above claim, **characterised by** spiral springs (46) as spring elements for applying a contact pressure between the housing (10, 12) and the valve discs (20; 22; 24).

6. Butterfly valve according to one of claims 4 or 5, **characterised in that** the seal carrier (34) is embodied as a means for shielding the spring elements (46) at least from direct exposure to water or steam.

7. Butterfly valve according to one of claims 1 to 6, **characterised by** a cup-shaped receptacle on the seal carrier (34) for receiving the seal in the region of the pressure supply line.

8. Butterfly valve according to the above claim, **characterised by** quivers (38; 42) in the housing (10) and/or in the seal carrier (23) as retainers for the spring elements (46).

9. Butterfly valve according to one of claims 1 to 8, **characterised by** a latching facility (50) between the seal carrier (34) and the housing (10), which blocks a movement of the seal carrier (34) against the direction of the contact pressure of the spring elements (46).

10. Butterfly valve according to the above claim, **characterised by** a plurality of latching stages of the latching facility (50).

11. Butterfly valve according to one of claims 9 or 10, **characterised by** latching protrusions (52) on the seal carrier (34) and by projections (54) on the housing (10) interacting with them, or conversely with approach surfaces (56) in each case running at an angle in the movement direction of the seal carrier (34) and with blocking surfaces (58) in each case running orthogonally to the movement direction of the seal carrier (34).

12. Butterfly valve according to one of claims 9 to 11, **characterised in** the latching apparatus (50) is embodied integrally with the seal carrier (34) or with the housing (10).

13. Butterfly valve according to one of claims 1 to 8, **characterised by** a screw or spindle drive between the seal carrier and the housing.

## Revendications

1. Soupape en disque céramique pour dispositifs de préparation de boissons chaudes ménagers, en particulier pour machines à café intégralement automatiques, avec une alimentation sous pression, avec au moins une sortie sous pression (16 ; 18) et avec une carcasse (10, 12) sous forme de dispositif de retenue pour les disques de soupape en céramique (20 ; 22 ; 24) contigus et déplaçables l'un contre l'autre qui y sont disposés, à savoir au moins un disque de répartiteur fixe (20 ; 24) et au moins un disque de commande déplaçable (22), et avec respectivement un joint (28 ; 30) pour étanchéifier les disques de soupape (20 ; 22 ; 24) par rapport à la carcasse (10, 12), **caractérisé par** des éléments élastiques (46) afin d'exercer une pression d'application entre la carcasse (10, 12) et les disques de soupape (20 ; 22 ; 24) **et par** un porte-joint (34) qui porte un joint (28) d'un disque de soupape (20) et est appuyé de manière déplaçable sur la carcasse (10) avec les éléments élastiques (46).

2. Soupape en disque selon la revendication 1, **caractérisée par** des éléments élastiques (46) en métal.

3. Soupape en disque selon la revendication 2, **caractérisée par** des dispositifs de guidage (35 ; 37) pour le guidage du porte-joint (34) dans la carcasse (10, 12) à la verticale par rapport au plan d'extension des disques de soupape (20 ; 22 ; 24).

4. Soupape en disque selon la revendication 1 à 3, **caractérisée par** des moyens pour l'ouverture d'un passage entre les disques de soupape (20 ; 22 ; 24) et la carcasse (10, 12) en présence d'une pression d'ouverture définie.

5. Soupape en disque selon la revendication précédente, **caractérisée par** des ressorts en spirale (46) comme éléments élastiques pour l'exercice d'une pression d'application entre la carcasse (10, 12) et les disques de soupape (20 ; 22 ; 24).

6. Soupape en disque selon l'une des revendications 4 ou 5, **caractérisée en ce que** le porte-joint (34) est exécuté sous forme de moyen de protection des éléments élastiques (46) au moins contre les effets directs de l'eau et de la vapeur.

7. Soupape en disque selon l'une des revendications 1 à 6, **caractérisée par** un logement en forme de gobelet sur le porte-joint (34) afin d'accueillir le joint dans la zone de l'alimentation sous pression.

8. Soupape en disque selon la revendication précédente, **caractérisée par** des carquois (38 ; 42) dans la carcasse (10) et/ou dans le porte-joint (23) sous forme de support des éléments élastiques (46).

9. Soupape en disque selon l'une des revendications 1 à 8, **caractérisée par** un dispositif d'encliquètement (50) entre le porte-joint (34) et la carcasse (10), lequel bloque un déplacement du porte-joint (34) dans le sens inverse de la pression d'application des éléments élastiques (46).

10. Soupape en disque selon la revendication précédente, **caractérisée par** une pluralité de niveaux d'encliquètement du dispositif d'encliquètement (50).

11. Soupape en disque selon l'une des revendications 9 ou 10, **caractérisée par** des saillies d'encliquètement (52) sur le porte-joint (34) et par des nez d'encliquètement (54) correspondants sur la carcasse (10) ou inversement avec respectivement des surfaces d'arrêt (56) inclinées dans le sens de déplacement du porte-joint (34) et avec respectivement des surfaces de blocage (58) s'étendant orthogonalement par rapport au sens de déplacement du porte-joint (34).

12. Soupape en disque selon l'une des revendications 9 à 11, **caractérisée en ce que** le dispositif d'encliquètement (50) est exécuté en une seule pièce avec le porte-joint (34) resp. avec la carcasse (10).

13. Soupape en disque selon l'une des revendications 1 à 8, **caractérisée par** une commande à filetage ou à vérin à vis entre le porte-joint et la carcasse.
